# EUROPEAN PATENT SPECIFICATION

(11) **EP 4 108 562 B1**
(45) Date of publication and mention of the grant of the patent: **04.12.2024**
(21) Application number: 21886317.3
(22) Date of filing: 28.10.2021
(51) Int. Cl.: B63J 2/14, F25J 1/02

(54) **FLOATING BODY**
SCHWIMMKÖRPER
CORPS FLOTTANT

(30) Priority: 30.10.2020 JP 2020182076; 31.03.2021 JP 2021061657
(43) Date of publication of application: 28.12.2022
(73) Proprietor: Mitsubishi Shipbuilding Co., Ltd., Yokohama-shi Kanagawa 220-8401 (JP)
(72) Inventor: MORIMOTO, Shinsuke, Yokohama-shi, Kanagawa 220-8401 (JP); ABE, Kazuya, Yokohama-shi, Kanagawa 220-8401 (JP); TSUMURA, Kenji, Yokohama-shi, Kanagawa 220-8401 (JP)
(74) Representative: Studio Torta S.p.A.
(86) International application number: PCT/JP2021/039820
(87) International publication number: WO 2022/092200

(56) References cited:
- JP-A- 2019 518 909
- JP-A- 2019 522 758
- KR-A- 20190 041 859
- KR-A- 20190 041 859
- KR-B1- 101 319 364
- US-A- 3 962 881
- US-A1- 2019 056 063
- YOO BYEONG-YONG ED - NITU PUICA ET AL: "The development and comparison of CO2BOG re-liquefaction processes for LNG fueled CO2carriers", ENERGY, ELSEVIER, AMSTERDAM, NL, vol. 127, 21 March 2017 (2017-03-21), pages 186 - 197, XP085025604, ISSN: 0360-5442, DOI: 10.1016/J.ENERGY.2017.03.073

## Description

### Technical Field

The present disclosure relates to a floating structure.

Priority is claimed on Japanese Patent Application No. 2020-182076, filed October 30, 2020, and Japanese Patent Application No. 2021-061657 filed March 31, 2021.

### Background Art

In a floating structure such as a ship including a tank for storing a liquefied gas, the liquefied gas stored inside the tank is vaporized due to heat input from an outside, and so-called a boil-off gas is generated. When the boil-off gas is generated, a pressure inside the tank rises. Therefore, for example, PTL 1 discloses a configuration as follows. In order to reliquefy a fuel boil-off gas generated from a liquefied gas fuel stored in a fuel tank, the fuel boil-off gas is cooled by cold heat of the boil-off gas of the liquefied gas generated in a cargo tank. Document PTL 2 discloses the preamble of independent claim 1.

### Citation List

### Patent Literature

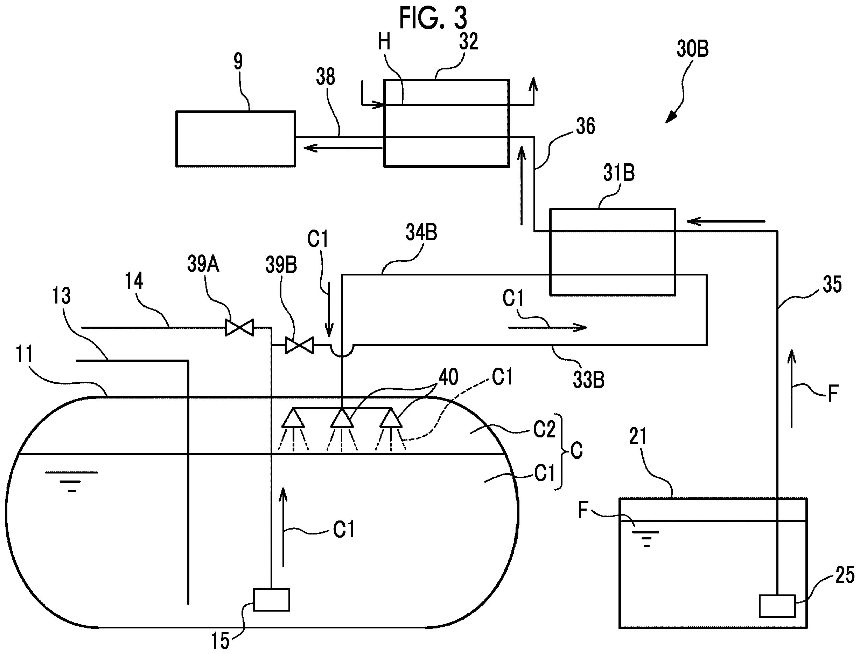

[PTL 1] Japanese Unexamined Patent Application Publication No. 2018-127137
[PTL 2] YOO BYEONG-YONG ED - NITU PUICA ET AL, "The development and comparison of CO2BOG re-liquefaction processes for LNG fueled CO2carriers", ENERGY, ELSEVIER, AMSTERDAM, NL, (20170321), vol. 127, doi:10.1016/J.ENERGY.2017.03.073, ISSN 0360-5442, pages 186 - 197, XP085025604 [X] 1,3 * abstract * * paragraph [02.2]; figures 3,6.
[PTL 3] KR101319364B1.

### Summary of Invention

### Technical Problem

Incidentally, when liquefied carbon dioxide is stored in a tank, the liquefied carbon dioxide is liquefied to recover carbon dioxide released into an atmosphere in the first place. Therefore, it is desirable that energy required for reliquefying carbon dioxide gas generated by vaporizing the liquefied carbon dioxide inside the tank is suppressed as much as possible. From a viewpoint of suppressing the energy required for reliquefication, it is conceivable to release the carbon dioxide gas into the atmosphere. However, as a matter of course, it is not preferable to release the recovered carbon dioxide into the atmosphere.

The present invention is made to solve the above-described problem, and an object of the present invention is to provide a floating structure which can efficiently cool and reliquefy liquefied carbon dioxide vaporized inside a tank while effectively utilizing energy.

### Solution to Problem

According to the present invention, in order to solve the above-described problem, there is provided a floating structure according to claim 1.

### Advantageous Effects of Invention

According to the floating structure of the present invention, the liquefied carbon dioxide vaporized inside the tank can be efficiently cooled and reliquefied while energy is effectively utilized.

### Brief Description of Drawings

Fig. 1 is a plan view illustrating a schematic configuration of a ship serving as a floating structure according to an embodiment which does not form part of the invention.
Fig. 2 is a view illustrating a schematic configuration of a reliquefying/fuel supply system provided in a ship according to a first embodiment which does not form part of the invention.
Fig. 3 is a view illustrating a schematic configuration of a reliquefying/fuel supply system provided in a ship according to a second embodiment which does not form part of the invention.
Fig. 4 is a view illustrating a schematic configuration of a reliquefying/fuel supply system provided in a ship according to a third embodiment which does not form part of the invention.
Fig. 5 is a view illustrating a schematic configuration of a reliquefying/fuel supply system provided in a ship according to the invention.

### Description of Embodiments

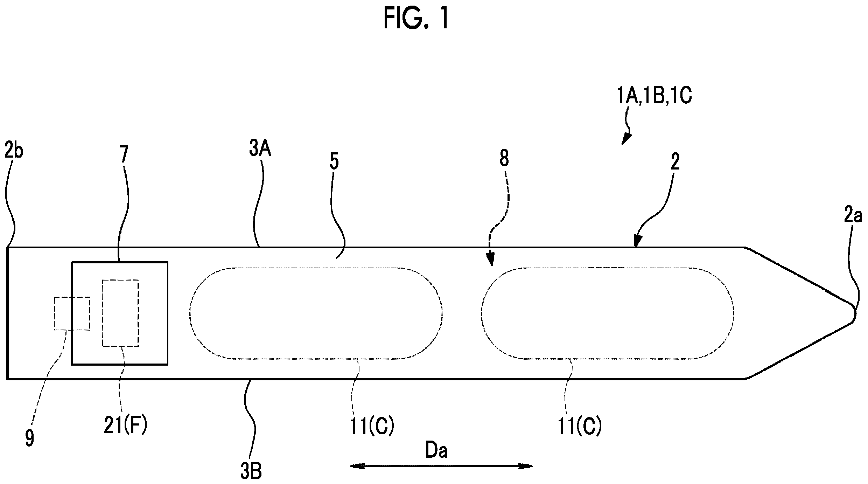

Hereinafter, a floating structure according to an embodiment of the present disclosure will be described with reference to Figs. 1 to 3.

### <First Embodiment>

### (Configuration of Ship)

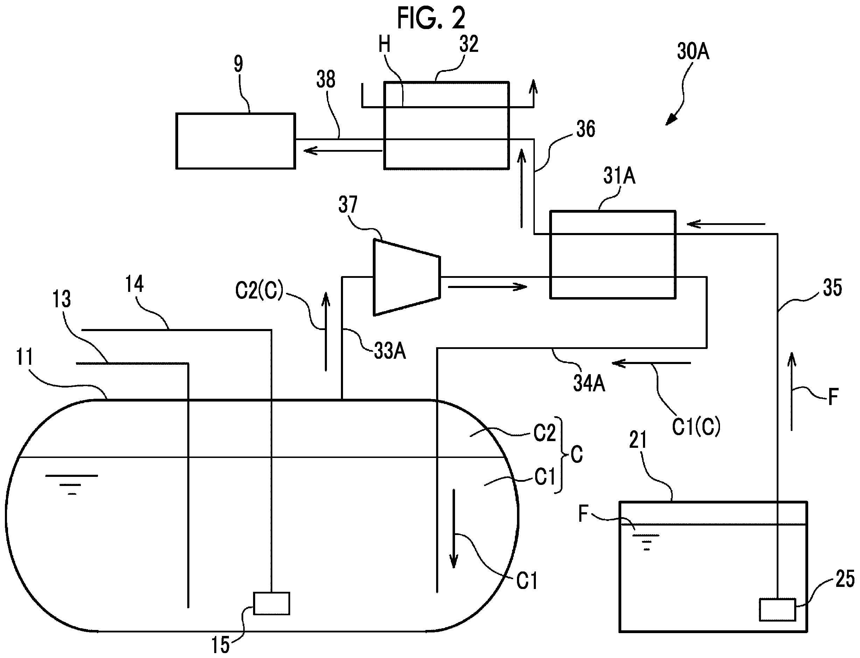

As illustrated in Fig. 1, in this embodiment, a ship 1A serving as a floating structure includes at least a hull 2 serving as a floating main structure, a combustor 9, a first tank 11, a second tank 21, and a reliquefying/fuel supply system 30A (refer to Fig. 2).

### (Configuration of Hull)

The hull 2 has a pair of broadsides 3A and 3B, a ship bottom (not illustrated), and an upper deck 5 which form an outer shell of the hull 2. The broadsides 3A and 3B have a pair of broadside outer plates respectively forming right and left broadsides. The ship bottom (not illustrated) has a ship bottom outer plate connecting the broadsides 3A and 3B. The pair of broadsides 3A and 3B and the ship bottom (not illustrated) cause the outer shell of the hull 2 to have a U-shape in a cross section orthogonal to a bow-stern direction Da. The upper deck 5 described as an example in this embodiment is a whole deck exposed outward. In the hull 2, a superstructure 7 having an accommodation space is formed on the upper deck 5 on a stern 2b side. A position of the superstructure 7 is merely an example, and may be disposed on a bow 2a side of the hull 2, for example.

A cargo tank storage compartment (hold) 8 for storing the first tank 11 is formed inside the hull 2.

The combustor 9 is disposed inside the hull 2. The combustor 9 shows a required function by combusting a liquefied combustible gas F stored in the second tank 21. For example, as the combustor 9, a main engine, a generator, and a boiler may be adopted. The main engine is an engine (internal combustion engine) that uses the liquefied combustible gas F as a fuel, and shows a propulsive force for propelling the hull 2. The generator includes an engine (internal combustion engine) that uses the liquefied combustible gas F as the fuel, and generates electric power used inside the hull 2 by using a driving force of the engine. The boiler combusts the liquefied combustible gas F to generate steam used inside the hull 2.

### (Configuration of First Tank)

The first tank 11 is disposed in the hull 2. The first tank 11 is disposed inside the cargo tank storage compartment 8. In this embodiment, two first tanks 11 are disposed at an interval in the bow-stern direction Da. In the present embodiment, for example, the first tank 11 has a cylindrical shape extending in a horizontal direction. The first tank 11 is not limited to the cylindrical shape, and the first tank 11 may have a spherical shape or a square shape.

The first tank 11 can store carbon dioxide C having a gas phase and a liquid phase. The carbon dioxide C stored in the first tank 11 is a cargo (freight) of the ship 1A.

As illustrated in Fig. 2, the carbon dioxide C stored inside the first tank 11 is separated into the liquid phase and the gas phase inside the first tank 11. The liquid phase, that is, the carbon dioxide C in a liquid state (hereinafter, referred to as a carbon dioxide liquid C1) is stored in a lower portion inside the first tank 11. The gas phase, that is, the carbon dioxide C in a gas state (hereinafter, referred to as a carbon dioxide gas C2) is stored in an upper portion inside the first tank 11. The carbon dioxide gas C2 is a boil-off gas generated in such a manner that the carbon dioxide liquid C1 inside the first tank 11 is naturally vaporized by heat input from an outside.

The first tank 11 includes a loading pipe 13 and an unloading pipe 14.

The loading pipe 13 loads the carbon dioxide C (carbon dioxide liquid C1) supplied from an onshore facility into the first tank 11. The loading pipe 13 penetrates a top portion of the first tank 11 from the outside of the first tank 11, and extends to the inside of the first tank 11. A tip portion of the loading pipe 13 is open inside the first tank 11. Fig. 2 illustrates a case where the tip portion of the loading pipe 13 is located in the lower portion of the first tank 11. However, a disposition of the tip portion of the loading pipe 13 is not limited thereto (the same applies to a loading pipe of a second embodiment to be described later).

The unloading pipe 14 feeds the carbon dioxide C (carbon dioxide liquid C1) inside the first tank 11 outboard. The unloading pipe 14 penetrates the top portion of the first tank 11 from the outside of the first tank 11, and extends to the inside of the first tank 11. An unloading pump 15 is provided in a tip portion of the unloading pipe 14. The unloading pump 15 suctions the carbon dioxide C (carbon dioxide liquid C1) inside the first tank 11. The unloading pipe 14 guides the carbon dioxide C (carbon dioxide liquid C1) delivered from the unloading pump 15 to the outside of the first tank 11 (outboard).

The second tank 21 is disposed in the hull 2. The liquefied combustible gas F is stored in the second tank 21. The liquefied combustible gas F is a fuel in the ship 1A, and is combusted in the combustor 9. That is, the second tank 21 is a so-called fuel tank for storing the fuel.

A temperature of the liquefied combustible gas F stored in the second tank 21 in a liquid state is lower than a temperature of the liquid phase of the carbon dioxide C stored in the first tank 11. Examples of the liquefied combustible gas F include a liquefied natural gas (LNG), methane, ethane, and hydrogen. In the present embodiment, a case where the liquefied natural gas is used as the liquefied combustible gas F will be described as an example.

### (Configuration of Reliquefying/Fuel Supply System)

The reliquefying/fuel supply system 30A reliquefies the carbon dioxide gas C2 stored inside the first tank 11. Furthermore, the reliquefying/fuel supply system 30A vaporizes the liquefied combustible gas F in a liquid state inside the second tank 21, and supplies the vaporized liquefied combustible gas F to the combustor 9. The reliquefying/fuel supply system 30A includes at least a first heat exchanger 31A and a second heat exchanger 32.

The first heat exchanger 31A exchanges heat between the carbon dioxide gas C2 and the liquefied combustible gas F. Each of a feed line 33A, a return line 34A, a first fuel line 35, and a second fuel line 36 is connected to the first heat exchanger 31A.

The feed line 33A guides the carbon dioxide gas C2 to the first heat exchanger 31A from the first tank 11. In the present embodiment, one end of the feed line 33A is connected to the top portion of the first tank 11. The feed line 33A guides the carbon dioxide gas C2 to the first heat exchanger 31A from the upper portion inside the first tank 11. A compressor 37 that compresses the carbon dioxide gas C2 is disposed in the feed line 33A.

The return line 34A guides the carbon dioxide liquid C1 liquefied by the first heat exchanger 31A to the first tank 11 from the first heat exchanger 31A.

The first fuel line 35 feeds the liquefied combustible gas F to the first heat exchanger 31A from the second tank 21 by using the fuel pump 25. The second fuel line 36 guides the liquefied combustible gas F to the second heat exchanger 32 from the first heat exchanger 31A.

The second heat exchanger 32 vaporizes the liquefied combustible gas F by exchanging heat of the liquefied combustible gas F passing through the first heat exchanger 31A with a heat medium H. In the second heat exchanger 32 in this embodiment, the liquefied natural gas is vaporized to be a natural gas. Examples of the heat medium H used in the second heat exchanger 32 include steam used inside the hull 2 and an exhaust gas from the combustor 9. A third fuel line 38 is connected to the second heat exchanger 32. The third fuel line 38 guides a gas obtained by vaporizing the liquefied combustible gas F to the combustor 9 from the second heat exchanger 32.

In the reliquefying/fuel supply system 30A configured in this way, the carbon dioxide gas C2 is fetched from the upper portion inside the first tank 11 by operating the compressor 37. The fetched carbon dioxide gas C2 is compressed by the compressor 37, and thereafter, is fed to the first heat exchanger 31A through the feed line 33A. On the other hand, the liquefied combustible gas F inside the second tank 21 is fed to the first heat exchanger 31A through the first fuel line 35 by the fuel pump 25. Then, in the first heat exchanger 31A, the heat is exchanged between the carbon dioxide gas C2 and the liquefied combustible gas F.

The temperature of the liquefied combustible gas F in a liquid state is lower than the temperature of the carbon dioxide C. Therefore, the compressed carbon dioxide gas C2 is cooled and reliquefied by the heat exchange in the first heat exchanger 31A. The cooled and reliquefied carbon dioxide liquid C1 is returned to the first tank 11 through the return line 34A.

In addition, the liquefied combustible gas F is heated by exchanging the heat with the carbon dioxide gas C2 having a higher temperature than the liquefied combustible gas F in the first heat exchanger 31A, and the temperature of the liquefied combustible gas F rises. The liquefied combustible gas F whose temperature is raised is fed to the second heat exchanger 32 through the second fuel line 36. The liquefied combustible gas F is further heated and vaporized by exchanging the heat with the heat medium H in the second heat exchanger 32. The vaporized liquefied combustible gas F is supplied to the combustor 9 through the third fuel line 38.

### (Operational Effect)

In the ship 1A of the above-described embodiment, the carbon dioxide gas C2 supplied to the first heat exchanger 31A from the first tank 11 through the feed line 33A is cooled and reliquefied by exchanging the heat with the liquefied combustible gas F in the first heat exchanger 31A. The reliquefied carbon dioxide liquid C1 is returned to the first tank 11 through the return line 34A. The temperature of the reliquefied carbon dioxide liquid C1 is lower than the temperature of the carbon dioxide C stored inside the first tank 11. Therefore, the cooled carbon dioxide liquid C1 is returned to the first tank 11 so that the temperature of the carbon dioxide C inside the first tank 11 is lowered. In this manner, a temperature rise inside the first tank 11 can be suppressed, and new vaporization of the carbon dioxide liquid C1 inside the first tank 11 can be suppressed.

On the other hand, the temperature of the liquefied combustible gas F stored in the second tank 21 is raised by exchanging the heat with the carbon dioxide gas C2 in the first heat exchanger 31A, and thereafter, the liquefied combustible gas F is fed to the second heat exchanger 32. Therefore, in the second heat exchanger 32, the liquefied combustible gas F in a state of being heated in advance by the first heat exchanger 31A is vaporized by exchanging the heat with the heat medium H. Therefore, heat energy required for vaporizing the liquefied combustible gas F in the second heat exchanger 32 may be reduced, compared to a case where the first heat exchanger 31A is not provided.

In this way, the carbon dioxide gas C2 generated inside the first tank 11 can be efficiently reliquefied the energy is effectively utilized.

In addition, the carbon dioxide gas C2 has a higher temperature than the carbon dioxide liquid C1 cooled by latent heat of vaporization when the boil-off gas is generated. Therefore, in the first heat exchanger 31A, the temperature of the liquefied combustible gas F can be raised to a higher temperature, compared to a case of the heat exchange with the carbon dioxide liquid C1. In this regard, the heat energy required for vaporizing the liquefied combustible gas F in the second heat exchanger 32 is further reduced.

### <Second Embodiment>

Next, a second embodiment of the floating structure according to the present invention will be described. The second embodiment described below is different from the first embodiment in only a configuration of a first heat exchanger 31B. Therefore, description will be made by assigning the same reference numerals to elements which are the same as those of the first embodiment, and repeated description will be omitted.

As illustrated in Fig. 3, a reliquefying/fuel supply system 30B of a ship 1B serving as a floating structure in the present embodiment includes the first heat exchanger 31B and the second heat exchanger 32.

The first heat exchanger 31B exchanges the heat between the carbon dioxide C (carbon dioxide liquid C1) and the liquefied combustible gas F. A feed line 33B, a return line 34B, the first fuel line 35, and the second fuel line 36 are connected to the first heat exchanger 31B.

The feed line 33B guides the carbon dioxide C to the first heat exchanger 31B from the first tank 11. More specifically, the feed line 33B guides the carbon dioxide liquid C1 to the first heat exchanger 31B from the lower portion in the first tank 11. The feed line 33B guides the carbon dioxide liquid C1 delivered from the unloading pump 15 to the first heat exchanger 31B. The feed line 33B is branched from the unloading pipe 14. On-off valves 39A and 39B are disposed in a portion where the feed line 33B and the unloading pipe 14 are branched. The on-off valve 39A opens and closes a flow path inside the unloading pipe 14. The on-off valve 39B opens and closes a flow path inside the feed line 33B. For example, when the carbon dioxide liquid C1 inside the first tank 11 is fed to the first heat exchanger 31B by the unloading pump 15, the on-off valve 39A is in a closed state, and the on-off valve 39B is in an open state. A case has been described where the carbon dioxide liquid C1 is delivered to the feed line 33B by the unloading pump 15. However, a small capacity pump may be installed separately from the unloading pump 15, and the carbon dioxide liquid C1 may be delivered to the feed line 33B by using the small capacity pump.

The return line 34B guides the carbon dioxide liquid C1 to the first tank 11 from the first heat exchanger 31B. In the present embodiment, the return line 34B is connected to the top portion of the first tank 11. An injection unit 40 is disposed in the top portion of the first tank 11. The injection unit 40 injects the carbon dioxide liquid C1 returned to the first tank 11 from the first heat exchanger 31B through the return line 34B to the gas phase of the upper portion inside the first tank 11. Examples of this injection form include a shower-like form and a mist-like form. The injected carbon dioxide liquid C1 falls downward while coming into wide contact with the carbon dioxide gas C2 stored inside the first tank 11.

In the reliquefying/fuel supply system 30B configured in this way, the carbon dioxide liquid C1 is delivered from the lower portion inside the first tank 11 by operating the unloading pump 15. The delivered carbon dioxide liquid C1 is fed to the first heat exchanger 31B through the feed line 33B. In the first heat exchanger 31B, the heat is exchanged between the carbon dioxide liquid C1 and the liquefied combustible gas F. Due to the heat exchange in the first heat exchanger 31B, the carbon dioxide liquid C1 is further cooled than the carbon dioxide liquid C1 inside the first tank 11, and is brought into a supercooled state. The carbon dioxide liquid C1 in the supercooled state is returned to the first tank 11 through the return line 34B.

The carbon dioxide liquid C1 in the supercooled state is injected into the carbon dioxide gas C2 inside the first tank 11 by the injection unit 40. In this manner, the carbon dioxide gas C2 stored in the upper portion inside the first tank 11 is cooled by the injected carbon dioxide liquid C1. In this manner, at least a portion of the carbon dioxide gas C2 is reliquefied.

On the other hand, the liquefied combustible gas F is heated by exchanging the heat with the carbon dioxide liquid C1 having a temperature higher than that of the liquefied combustible gas F in the first heat exchanger 31B, and the temperature of the liquefied combustible gas F rises. The liquefied combustible gas F whose temperature is raised is fed to the second heat exchanger 32 through the second fuel line 36. The liquefied combustible gas F is further heated and vaporized by exchanging the heat with the heat medium H in the second heat exchanger 32. The vaporized liquefied combustible gas F is supplied to the combustor 9 through the third fuel line 38.

### (Operational Effect)

In the ship 1B of the above-described second embodiment, the carbon dioxide liquid C1 supplied from the first tank 11 through the feed line 33B is cooled by exchanging the heat with the liquefied combustible gas F in the first heat exchanger 31B. The cooled carbon dioxide liquid C1 is returned to the first tank 11 through the return line 34B. Since the cooled carbon dioxide liquid C1 is supplied into the first tank 11, the temperature of the carbon dioxide C inside the first tank 11 is lowered. In this manner, the temperature rise inside the first tank 11 can be suppressed, and new vaporization of the carbon dioxide liquid C1 can also be suppressed.

Furthermore, the temperature of the liquefied combustible gas F stored in the second tank 21 is raised by exchanging the heat with the carbon dioxide C having a higher temperature than the liquefied combustible gas F in the first heat exchanger 31B, and thereafter, the liquefied combustible gas F is fed to the second heat exchanger 32. Therefore, in the second heat exchanger 32, the liquefied combustible gas F in a state of being heated in advance by the first heat exchanger 31B is vaporized by exchanging the heat with the heat medium H. Therefore, the heat energy required for vaporizing the liquefied combustible gas F in the second heat exchanger 32 may be reduced, compared to a case where the first heat exchanger 31B is not provided.

In this way, the carbon dioxide gas C2 generated inside the first tank 11 can be efficiently reliquefied the energy is effectively utilized.

In addition, in the first heat exchanger 31B of the second embodiment, the heat is exchanged between the carbon dioxide liquid C1 fetched from the inside of the first tank 11 and the liquefied combustible gas F. In this manner, the carbon dioxide liquid C1 in the supercooled state is fed into the first tank 11. Therefore, the carbon dioxide gas C2 inside the first tank 11 can be cooled and reliquefied.

In addition, in the ship 1B of the second embodiment, the carbon dioxide liquid C1 is supplied to the first heat exchanger 31B from the first tank 11 by the unloading pump 15. The unloading pump 15 is provided to deliver the carbon dioxide liquid C1 inside the first tank 11 to the outside of the floating main structure 2 through the unloading pipe 14. In this way, the unloading pump 15 can also be used to reliquefy the carbon dioxide gas C2. Therefore, an increase in the number of components can be suppressed, and a cost increase can be suppressed.

In addition, in the ship 1B of the second embodiment, the carbon dioxide liquid C1 brought into the supercooled state by the heat exchange in the first heat exchanger 31B is injected into the upper portion inside the first tank 11 by the injection unit 40. Therefore, the carbon dioxide liquid C1 in the supercooled state can be brought into wider contact with the carbon dioxide gas C2 inside the first tank 11. Therefore, a larger amount of the carbon dioxide gas C2 can be reliquefied.

### <Third Embodiment>

Next, a third embodiment of the floating structure according to the present invention will be described. The third embodiment described below is different from the first embodiment in that a target for exchanging the heat with the liquefied combustible gas F is a refrigerant. Therefore, Fig. 1 will be used as a reference, and description will be made by assigning the same reference numerals to elements which are the same as those of the first embodiment. Furthermore, detailed description of the elements which are the same as those of the first embodiment will be omitted.

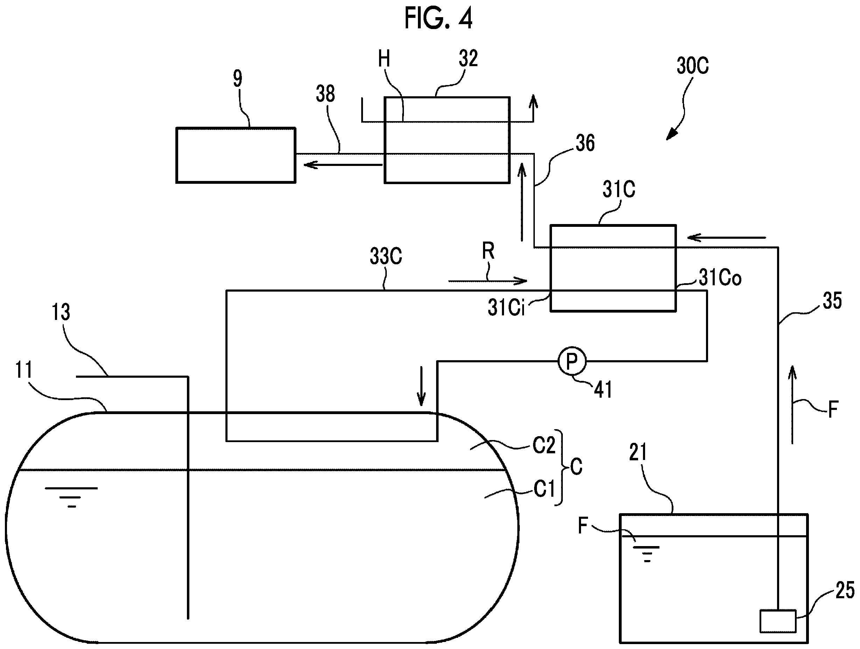

As illustrated in Fig. 4, a reliquefying/fuel supply system 30C of a ship 1C serving as a floating structure in the present embodiment includes at least a first heat exchanger 31C, a second heat exchanger 32, a circulation line 33C, and a circulation pump 41.

The first heat exchanger 31C exchanges the heat between a refrigerant R and the liquefied combustible gas F. The first fuel line 35, the second fuel line 36, and the circulation line 33C are connected to the first heat exchanger 31C.

The circulation line 33C forms a flow path that circulates the refrigerant R between the inside of the first tank 11 and the first heat exchanger 31C. One end of the circulation line 33C is connected to a refrigerant outlet 31Co of the first heat exchanger 31C, and the other end of the circulation line 33C is connected to a refrigerant inlet 31Ci of the first heat exchanger 31C. Then, an intermediate portion of the circulation line 33C passes through the inside of the first tank 11. The circulation line 33C in the third embodiment passes through the gas phase inside the first tank 11. In the third embodiment, a portion of the circulation line 33C which passes through at least the first tank 11 (hereinafter, referred to as a portion passing through the inside of the first tank 11) can be formed of a material having high thermal conductivity such as metal, a material having a large heat transfer area such as a fin tube, and a combination thereof. In addition, a portion of the circulation line 33C which is disposed outside the first tank 11 (particularly, a portion between the refrigerant outlet 31Co and the first tank 11) may be formed of a material having high heat insulating performance, or may be covered with a heat insulating material. As the above-described refrigerant R, a refrigerant having a boiling point of approximately -40°C can be used. A case has been described where the portion passing through the inside of the first tank 11 passes through only the gas phase. However, the portion passing through the inside of the first tank 11 is not limited to a case of passing through only the gas phase. For example, some of the portion passing through the inside of the first tank 11 may be in contact with the liquid phase. In addition, without being limited to a configuration in which the portion passing through the inside of the first tank 11 is always in contact with the gas phase, for example, the portion passing through the inside of the first tank 11 may be submerged in the liquid phase when a liquid level inside the first tank 11 rises.

The circulation pump 41 is installed in an intermediate portion of the circulation line 33C. The circulation pump 41 of the present embodiment is disposed between an outlet 31Co of the first heat exchanger 31C and the first tank 11 in the circulation line 33C. The circulation pump 41 delivers the refrigerant R inside the circulation line 33C from one end to the other end of the circulation line 33C.

In the reliquefying/fuel supply system 30C configured in this way, the circulation pump 41 is operated so that the refrigerant R discharged from the outlet 31Co of the first heat exchanger 31C flows toward the first tank 11 through a flow path inside the circulation line 33C. Then, the refrigerant R flows through the flow path of the circulation line 33C disposed inside the first tank 11. In this case, the refrigerant R exchanges the heat with the carbon dioxide C (at least one of the carbon dioxide gas C2 and the carbon dioxide liquid C1) inside the first tank 11, and the temperature of the refrigerant R rises.

Thereafter, the refrigerant R flows through the flow path of the circulation line 33C disposed outside the first tank 11, and thereafter, reaches the refrigerant inlet 31Ci of the first heat exchanger 31C. Then, the refrigerant R exchanges the heat with the liquefied combustible gas F in the first heat exchanger 31C to lower the temperature, and is discharged again from the refrigerant outlet 31Co. In this way, the refrigerant R is circulated inside the circulation line 33C. As a timing at which the circulation pump 41 is operated in the third embodiment, the circulation pump 41 may be operated only when a pressure inside the first tank 11 rises above a threshold value. Alternatively, the circulation pump 41 may be always operated when the combustor 9 is operated.

The liquefied combustible gas F which is heated by exchanging the heat with the refrigerant R having a temperature higher than that of the liquefied combustible gas F in the first heat exchanger 31B and whose temperature is raised is fed to the second heat exchanger 32 through the second fuel line 36 as in the first embodiment. The liquefied combustible gas F is further heated and vaporized by exchanging the heat with the heat medium H in the second heat exchanger 32. The vaporized liquefied combustible gas F is supplied to the combustor 9 through the third fuel line 38.

In addition, the temperature of the carbon dioxide C inside the first tank 11 exchanging the heat with the refrigerant R is lowered. In this case, the temperature of the carbon dioxide gas C2 is lowered by directly exchanging the heat with the refrigerant R or by coming into contact with the carbon dioxide liquid C1 whose heat is exchanged with the refrigerant R. In this manner, a volume of the carbon dioxide gas C2 is reduced in the gas state, or the carbon dioxide gas C2 is liquefied. In this manner, a pressure increase inside the first tank 11 is suppressed.

### (Operational Effect)

The ship 1C of the above-described third embodiment includes the hull 2, the first tank 11 disposed in the hull 2 and storing the carbon dioxide C having the gas phase and the liquid phase, the second tank 21 disposed in the hull 2 and capable of storing the liquefied combustible gas F whose temperature in the liquid state is lower than the temperature of the liquid phase of the carbon dioxide C, the first heat exchanger 31C that exchanges the heat between the liquefied combustible gas F and the refrigerant R, the circulation line 33C that circulates the refrigerant R between the inside of the first tank 11 and the first heat exchanger 31C, the circulation pump 41 provided in the intermediate portion of the circulation line 33C and circulate the refrigerant R, the second heat exchanger 32 that vaporizes the liquefied combustible gas F passing through the first heat exchanger 31C by exchanging the heat with the heat medium H, and the combustor 9 that combusts the liquefied combustible gas F vaporized by the second heat exchanger 32.

According to the third embodiment, in addition to the operational effect of the first embodiment, the heat can be exchanged between the carbon dioxide C inside the first tank 11 and the liquefied combustible gas F via the refrigerant R. Therefore, the carbon dioxide gas C2 or the carbon dioxide liquid C1 does not need to flow into a pipe outside the first tank 11. Therefore, the heat input to the carbon dioxide C can be suppressed, and the pressure inside the first tank 11 can be efficiently reduced.

In addition, in the ship 1C of the above-described third embodiment, the circulation line 33C passes through at least the liquid phase of the first tank 11.

According to this configuration, the temperature of the carbon dioxide gas C2 inside the first tank 11 whose heat is exchanged with the refrigerant R can be lowered. In this manner, a volume of the carbon dioxide gas C2 can be reduced in the gas state, or the carbon dioxide gas C2 can be liquefied. Therefore, a pressure increase inside the first tank 11 can be efficiently suppressed.

### (Another Embodiment)

In the above-described embodiment, a configuration including two first tanks 11 has been adopted. However, the present disclosure is not limited thereto. The configuration may include one, three, or more first tanks 11. In addition, in the above-described embodiment, a case where the plurality of first tanks 11 are aligned in the bow-stern direction Da has been described as an example. However, the first tanks 11 may be aligned in a ship width direction (in other words, a right-left broadside direction).

In addition, in the above-described embodiment, the ships 1A and 1B have been described as examples of the floating structure. However, the present disclosure is not limited thereto. The floating structure may be an offshore floating structure facility which does not include a propulsion mechanism.

In addition, in the above-described third embodiment, a case has been described where the heat is exchanged between the refrigerant R and the carbon dioxide C by utilizing the heat conduction of the pipe of the circulation line 33C. However, another heat exchanger that exchanges the heat between the refrigerant R and the carbon dioxide C may be provided in the intermediate portion of the circulation line 33C inside the first tank 11.

In addition, in the circulation line 33C in the above-described third embodiment, the flow path of the refrigerant R may meander in the portion disposed inside the first tank 11.

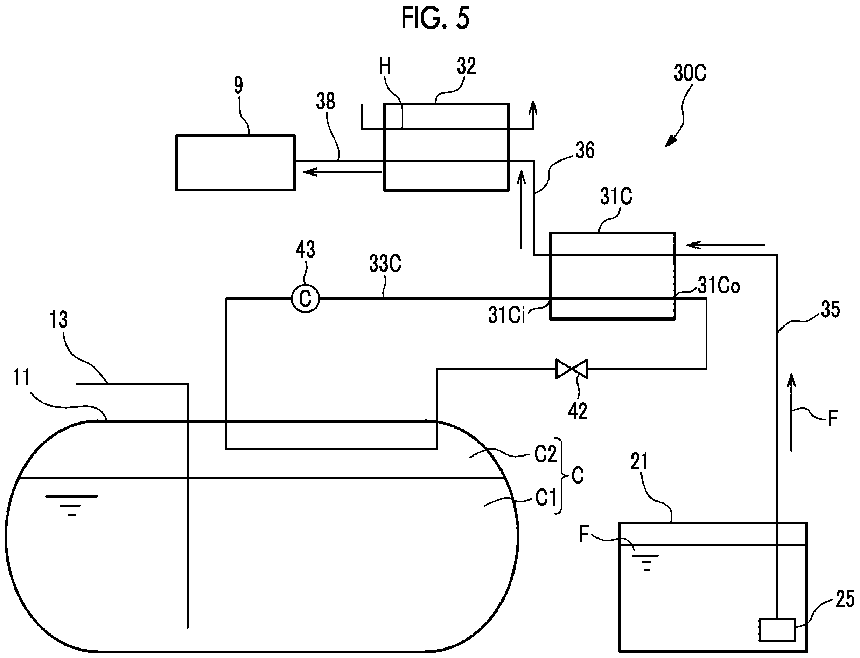

In addition, in the above-described third embodiment, a case has been described where the refrigerant R is circulated in the liquid state. However, according to the invention, as illustrated in Fig. 5, instead of the above-described circulation pump 41, an expansion valve 42 and a compressor 43 is provided to construct a refrigerating cycle in the intermediate portion of the circulation line 33C. In this case, the expansion valve 42 may be provided between the refrigerant outlet 31Co of the first heat exchanger 31C and the first tank 11, and the compressor 43 may be provided between the first tank 11 and the refrigerant inlet 31Ci of the first heat exchanger 31C. When a refrigerating cycle is constructed in this way, capacity to cool the carbon dioxide gas C2 can be improved. Therefore, for example, even when the pressure inside the first tank 11 is changed in a short time, the refrigerating cycle can quickly dealt with the pressure change.

### Industrial Applicability

According to the floating structure of the present disclosure, the liquefied carbon dioxide vaporized inside the tank can be efficiently cooled and reliquefied while energy is effectively utilized.

### Reference Signs List

1A, 1B, 1C: Ship (floating structure)
2: Hull (floating main structure)
2a: Bow
2b: Stern
3A, 3B: Broadside
5: Upper deck
7: Superstructure
8: Cargo tank storage compartment
9: Combustor
11: First tank
13: Loading pipe
14: Unloading pipe
15: Unloading pump
21: Second tank
25: Fuel pump
30A, 30B, 30C: Reliquefying/fuel supply system
31A, 31B, 31C: First heat exchanger
31Ci: Refrigerant inlet
31Co: Refrigerant outlet
32: Second heat exchanger
33A, 33B: Feed line
34A, 34B: Return line
33C: Circulation line
35: First fuel line
36: Second fuel line
37: Compressor
38: Third fuel line
39A, 39B: On-off valve
40: Injection unit
41: Circulation pump
42: Expansion valve
43: Compressor
C: Carbon dioxide
C1: Carbon dioxide liquid (liquid of carbon dioxide)
C2: Carbon dioxide gas (gas of carbon dioxide)
F: Liquefied combustible gas
H: Heat medium
R: Refrigerant

## Claims

1. A floating structure (1C) comprising:
a floating main structure (2);
a first tank (11) disposed in the floating main structure (2) and storing carbon dioxide having a gas phase and a liquid phase;
a second tank (21) disposed in the floating main structure (2) and capable of storing a liquefied combustible gas whose temperature in a liquid state is lower than a temperature of the liquid phase of the carbon dioxide;
a first heat exchanger (31C) that exchanges heat between the liquefied combustible gas and a refrigerant;
a second heat exchanger (32) that vaporizes the liquefied combustible gas by exchanging heat of the liquefied combustible gas which has passed through the first heat exchanger (31C), with a heat medium; and
a combustor (9) that combusts the liquefied combustible gas vaporized by the second heat exchanger (32), **characterized in that**
the floating structure further comprises a circulation line (33C) that circulates the refrigerant between an inside of the first tank (11) and the first heat exchanger (31C), wherein the circulation line (33C) passes through at least a gas phase of the first tank (11), and
an expansion valve (42) and a compressor (43) to construct a refrigerating cycle in the circulation line (33C).

## Patentansprüche

1. Schwimmstruktur (1C), die aufweist:
eine schwimmende Hauptstruktur (2);
einen ersten Behälter (11), der in der schwimmenden Hauptstruktur (2) angeordnet ist und Kohlendioxid mit einer Gasphase und einer flüssigen Phase lagert;
einen zweiten Behälter (2), der in der schwimmenden Hauptstruktur (2) angeordnet ist und fähig ist, ein verflüssigtes brennbares Gas zu lagern, dessen Temperatur in einem flüssigen Zustand niedriger als eine Temperatur des Kohlendioxids in der flüssigen Phase ist;
einen ersten Wärmetauscher (31C), der Wärme zwischen dem verflüssigten brennbaren Gas und einem Kältemittel austauscht;
einen zweiten Wärmetauscher (32), der das verflüssigte brennbare Gas durch Austausch von Wärme des verflüssigten brennbaren Gases, das den ersten Wärmetauscher (31C) durchlaufen hat, mit einem Wärmemedium verdampft; und
einen Verbrenner (9), der das verflüssigte brennbare Gas, das von dem zweiten Wärmetauscher (32) verflüssigt wird, verbrennt, **dadurch gekennzeichnet, dass**
die Schwimmstruktur ferner eine Zirkulationsleitung (33C) aufweist, die das Kältemittel zwischen einem Inneren des ersten Behälters (11) und dem ersten Wärmetauscher (31C) zirkuliert, wobei
die Zirkulationsleitung (33C) wenigstens eine Gasphase des ersten Behälters (11) durchläuft, und
ein Expansionsventil (42) und einen Verdichter (43), um einen Kältekreislauf in der Zirkulationsleitung (33C) aufzubauen.

## Revendications

1. Structure flottante (1C) comprenant :
une structure principale flottante (2) ;
un premier réservoir (11) disposé dans la structure principale flottante (2) et stockant du dioxyde de carbone ayant une phase gazeuse et une phase liquide ;
un second réservoir (21) disposé dans la structure principale flottante (2) et capable de stocker un gaz combustible liquéfié dont la température à l'état liquide est inférieure à une température de la phase liquide du dioxyde de carbone ;
un premier échangeur de chaleur (31C) qui échange de la chaleur entre le gaz combustible liquéfié et un réfrigérant ;
un second échangeur de chaleur (32) qui vaporise le gaz combustible liquéfié en échangeant de la chaleur du gaz combustible liquéfié qui a traversé le premier échangeur de chaleur (31C) avec un fluide thermique ; et
une chambre de combustion (9) qui brûle le gaz combustible liquéfié vaporisé par le second échangeur de chaleur (32), **caractérisée en ce que**
la structure flottante comprend en outre une conduite de circulation (33C) qui fait circuler le réfrigérant entre un intérieur du premier réservoir (11) et le premier échangeur de chaleur (31C), dans laquelle la conduite de circulation (33C) traverse au moins une phase gazeuse du premier réservoir (11), et
un détendeur (42) et un compresseur (43) pour construire un cycle de réfrigération dans la conduite de circulation (33C).
